Europäisches Patentamt

European Patent Office

Office européen des brevets

(19)

(11) **EP 0 968 795 A1**

(12) # DEMANDE DE BREVET EUROPEEN

(43) Date de publication:
**05.01.2000 Bulletin 2000/01**

(51) Int Cl.$^7$: **B25B 23/14**, B23P 19/06

(21) Numéro de dépôt: **99420147.3**

(22) Date de dépôt: **29.06.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **03.07.1998 FR 9808714**

(71) Demandeur: **SAM OUTILLAGE Société Anonyme F-42000 Saint-Etienne Cedex (FR)**

(72) Inventeur: **Heyraud, Georges 43140 Saint Didier en Velay (FR)**

(74) Mandataire: **Perrier, Jean-Pierre et al Cabinet GERMAIN & MAUREAU 12 rue de la République 42000 St-Etienne (FR)**

(54) **Procédé et dispositif de mesure et de serrage d'un assemblage par organe fileté**

(57) Ce procédé comprend, une phase de mesure et de mémorisation d'un couple de serrage Cs, une phase de mesure de mémorisation d'un couple de desserrage Cd, et une phase de traitement dont une première étape réalise l'expression Cs - Cd et mémorise la valeur obtenue. Selon l'invention, cette étape est suivie par une deuxième étape de calcul consistant à traiter soit l'expression $\frac{Cs-Cd}{2}$, soit l'expression $\frac{Cs-Cd}{2Cs}$, pour obtenir soit la valeur Ceff du couple efficace sollicitant l'assemblage fileté, soit la valeur du rendement Rdt de cet assemblage, à mémoriser la valeur obtenue et à l'afficher.

Dans des variantes, d'autres étapes de la phase de traitement traitent des expressions complémentaires permettant d'obtenir, de mémoriser, et d'afficher, des valeurs d'autres caractéristiques de l'assemblage, telles que force de précontrainte, contrainte de traction, allongement, coefficient de frottement moyen, couple de torsion, contrainte de torsion, contrainte totale.

Dans son application au resserrage, après serrage et desserrage, le procédé comprend des étapes de traitement permettant, à partir d'une valeur imposée d'une caractéristique, de déterminer la valeur du couple de resserrage.

FIG 2

EP 0 968 795 A1

## Description

L'invention concerne le domaine de la mesure des caractéristiques mécaniques d'un assemblage par un organe fileté, tel que vis, boulon, écrou, et le serrage d'un tel assemblage à une valeur déterminée et effective d'une caractéristique mécanique choisie.

La présente invention, faisant référence à des équations mathématiques mettant en oeuvre des caractéristiques, dimensionnelles et mécaniques, d'un assemblage par un organe fileté, il est d'abord donné, par ordre alphabétique, la définition des différentes caractéristiques utilisées dans la description. Ces caractéristiques sont conformes à celles données dans la norme francaise E25.030 d'août 1984.

| | |
|---|---|
| All | allongement de la vis |
| Cd | couple de desserrage |
| Ceff | Couple efficace exercé sur l'assemblage après serrage au couple Cs |
| Ceffr | Couple efficace après resserrage |
| Cr | Couple de resserrage |
| Cre | Couple de resserrage réel |
| Cs | Couple de serrage |
| Ct | Couple de torsion de la vis |
| d2 | Diamètre moyen du filetage |
| Dm | Diamètre moyen de la tête |
| E | Module d'élasticité longitudinal du matériau de la vis |
| f | Coefficient de frottement moyen entre tête et filets |
| Fo | Force de précontrainte de la vis |
| L | Longueur étirée de la vis (longueur entre ses appuis + 0,8d) |
| n | Contrainte de traction dans la vis |
| p | Pas de la vis |
| r | Rayon de la section résistante de la vis (moitié du diamètre équivalent selon norme française) |
| r1 | Rayon moyen du filetage de la vis |
| R | Rayon moyen de la tête de vis |
| Rdt | Rendement de l'assemblage |
| t | Contrainte de torsion de la vis |
| T | Contrainte totale de la vis |

La valeur de r1 prend en compte la forme du filet de la vis et est égal à 0,5 d pour une vis à filet carré et à 0,583 d pour une vis à filet triangulaire ISO, d étant le diamètre nominal de la partie filetée.

On connaît bien maintenant les problèmes liés au serrage du couple d'une vis. La formule de calcul du couple de serrage la plus utilisée est celle de KELLERMAN et KLEIN, comme rappelé dans la norme française E25-030 d'août 1984 :

$$(1)\ Cs = Fo\left[\frac{p}{2\Pi} + f\left(0,583d2 + \frac{Dm}{2}\right)\right]$$

La force de serrage Fo dépend du frottement moyen $\underline{f}$ sur les filets et sur la tête. Ce coefficient de frottement dépend des matériaux en présence, de leur état de surface et de leur lubrification. Les rendements mesurés en laboratoire varient du simple au double. Ils peuvent aller de 7 % pour une vis non graissée, de fabrication courante, à 15 % pour une vis de bonne qualité de forme et de graissage. Dans ces conditions, pour un couple de serrage de 100 Nm, le couple efficace servant à serrer réellement un assemblage par vis est situé entre 7 et 15 Nm et le reste est absorbé par les frottements.

Pour palier à cet inconvénient, différents procédés de mesure et de serrage ont été développés.

Ainsi, la demande de brevet français FR-A-2 527 714 décrit un procédé de mesure et de serrage comprenant un cycle de vissage et de dévissage et consistant :

- à mesurer les couples, respectivement, de vissage Cs et de dévissage Cd, en fonction du déplacement angulaire de l'organe fileté,
- à calculer un coefficient de proportionnalité K par la formule $\frac{\Pi(Cs-Cd)}{pCs}$ faisant intervenir le pas du filetage,
- à déterminer le couple de serrage final Cf devant être appliqué pour obtenir une force de précontrainte Fo prédéterminée dans la vis par la formule $Cf = \frac{Fo}{K}$ et
- à appliquer le couple de serrage final Cf à l'assemblage.

Ce procédé, dont la validité du coefficient de proportionnalité est contestée, ne permet d'imposer que la valeur de la force de précontrainte Fo et exclut donc toute autre caractéristique pourtant utilisée dans certains secteurs techniques, tels qu'allongement, contrainte de traction, contrainte de torsion ou contrainte totale.

La demande de brevet français FR-A-2 677 571, en partant d'un raisonnement sur la conservation de l'énergie aboutit à des équations similaires comprenant un coefficient proportionnel au pas du filetage pour obtenir la valeur de la force de tension dans la vis, et précise que les valeurs des couples de vissage et de dévissage sont prélevées, soit statistiquement à la limite de repos du vissage ou du desserrage, soit dynamiquement en une succession de positions concordantes. La description précise que le couple de dévissage est prélevé à la limite du repos du glissement de la partie mobile de l'élément de fixation et que le couple de dévissage est prélevé, au passage à son maximum, à la limite du repos pendant le glissement de la partie mobile de l'élément de fixation sur la partie fixe de l'assemblage.

Pour prélever avec ce procédé, les valeurs de couple dans des conditions optimales, il est nécessaire d'ajouter un capteur de mouvements angulaires, ce qui peut ajouter des imprécisions. Par ailleurs, et comme pour le procédé précédent, celui-ci est limité à la détermination de valeurs de forces, et exclut la détermination de toute autre caractéristique.

La présente invention a pour objet de remédier à ces inconvénients en fournissant un procédé de mesure permettant de déterminer, de manière simple, la valeur de diverses caractéristiques d'un assemblage et en particulier le couple efficace appliqué à l'assemblage pour une valeur donnée du couple de serrage, et le rendement de l'assemblage, sans qu'il y ait lieu de prendre en compte les conditions de frottement, ou une quelconque valeur de rotation angulaire des éléments.

Le procédé, selon l'invention, est du type de ceux décrits précédemment et comprenant :

- une première phase de serrage avec mesure du couple de serrage Cs, à sa valeur maximale et mémorisation de cette valeur,
- une deuxième phase de desserrage avec mesure du couple de desserrage Cd, à sa valeur maximale, et mémorisation de ce couple Cd,
- une phase de traitement des valeurs mémorisées lors des deux premières phases, et dans laquelle une première étape réalise la soustraction :

$$(2) \qquad Cs - Cd$$

et mémorise la valeur obtenue. Selon l'invention, le procédé consiste, dans une deuxième étape de la phase de traitement, à soumettre la valeur résultant de la soustraction :

(2) Cs - Cd de la première étape,

- soit à sa division par deux selon l'expression :
  (3) $\frac{Cs-Cd}{2}$ pour fournir la valeur effective du couple efficace Ceff sollicitant l'assemblage,
- soit à sa division par le produit 2Cs selon l'expression :
  (4) $\frac{Cs-Cd}{2Cs}$ pour fournir la valeur du rendement Rdt de l'assemblage,

- à mémoriser la valeur de Ceff ou de Rdt obtenue,
- et à afficher cette valeur.

A la différence des procédés antérieurs, mettant en oeuvre un coefficient de proportionnalité lié au pas ou au frottement, le procédé selon l'invention se passe, dans sa première étape, de toute utilisation de caractéristiques dimensionnelles ou de frottement et permet d'obtenir directement le rendement.

Les expressions (3) $\frac{Cs\text{-}Cd}{2}$ et (4) $\frac{Cs\text{-}Cd}{2Cs}$ utilisées se déduisent de l'équation (1)

$$Cs = Fo \left[ \frac{p}{2\Pi} + f\left( 0,583d2 + \frac{Dm}{2} \right) \right]$$

de KELLERMAN et KLEIN de la façon suivante :

En raisonnant par l'absurde, si le frottement n'existait pas, les termes liés au frottement seraient nuls et le rendement égal à 1. On aurait donc:

$$(5) \qquad Cs = \frac{Fop}{2\Pi} = Ceff$$

L'équation (6) de l'équilibre statique de la vis seule au serrage peut s'écrire:

Cs = couple efficace + couple de frottement des filets + couple de frottement sous tête, soit :

$$(6) \qquad Cs = \frac{Fop}{2\Pi} + Fof\,r + Fof\,R$$

tandis que l'équation (7) de l'équilibre statique de la vis seule au desserrage peut s'écrire:

$$(7) \qquad -Cd = \frac{Fop}{2\Pi} - Fof\,r - Fof\,R$$

puisque Cd et $\underline{f}$ sont de signe contraire à ceux qu'ils avaient dans l'équation (6) Cs $= \frac{Fop}{2\Pi} + Fof\,r + Fof\,R$.

La somme algébrique de (6) et de (7) donne :

$$(8) \qquad Cs\text{-}Cd = \frac{2Fop}{2\Pi} = \frac{Fop}{\Pi}$$

A partir de l'expression (5), le couple efficace Ceff devient :

$$(3) \qquad Ceff = \frac{Cs\text{-}Cd}{2} = \frac{Fop}{2\Pi}$$

On notera que l'équation (3) : $\frac{Cs\text{-}Cd}{2}$ peut aussi s'appliquer à la différence de valeur absolue.

De l'équation (3) se déduit le rendement Rdt qui est égal à :
$\frac{Ceff}{Cs}$ (9) s'écrivant également $\frac{Cs\text{-}Cd}{2Cs}$ (4).

Selon les formes de mise en oeuvre du procédé, les valeurs mémorisées du couple efficace Ceff et du rendement Rdt sont utilisées pour déterminer d'autres caractéristiques, soit dans le cadre d'opérations de mesure par un unique cycle de vissage-dévissage, soit dans le cadre d'opérations de mesure et de serrage par un unique cycle de vissage-dévissage-resserrage pour une valeur imposée d'une caractéristique physique.

Le tableau I résume quelques-unes des étapes supplémentaires du procédé dans le cas de son application à la mesure et au contrôle en indiquant, pour chacune des étapes, en colonne A, sa position par rapport à l'étape 2 de détermination du couple efficace Ceff, en colonne B, la ou les caractéristiques dont les valeurs sont mémorisées, en colonne C. la ou les caractéristiques dont les valeurs sont choisies car imposées, en colonne D, les expressions mises en oeuvre et, en colonne E, la caractéristique dont la valeur est recherchée, cette valeur étant, à son tour, affichée et mémorisée. Il met en évidence que le procédé permet, par des étapes successives ou non. d'obtenir la valeur de la plupart des caractéristiques effectives d'un assemblage fileté, en répondant ainsi aux besoins des bureaux d'étude, des bureaux de méthode, des services de qualité ou de réception, et des fabricants de visserie.

Le procédé de mesure du Tableau I permet de réaliser des mesures en vraie grandeur sur site et de connaître tous les paramètres de la vis en fonction du rendement. Il permet aussi d'adapter les éléments de l'assemblage, afin qu'ils satisfassent aux caractéristiques mécaniques voulues, par l'étude des variations du rendement en fonction des variations des conditions de frottement, résultant du graissage de la tête et/ou du filetage, mais aussi en fonction des états de surface et traitement de surface.

Le tableau II résume quelques unes des étapes supplémentaires du procédé dans le cas de son application au serrage contrôlé par un cycle de serrage-desserrage-reserrage. Chacune des étapes est indépendante et est effectuée après l'étape 3 de la détermination du rendement de l'assemblage. Elle permet d'obtenir, à partir d'une valeur mémorisée du rendement, obtenu à l'étape précédente, et d'une valeur imposée d'au moins une caractéristique mécanique, le couple de resserrage Cr, c'est à dire le couple qu'il faut communiquer à l'écrou ou à la tête de vis pour obtenir une valeur déterminée de la caractéristique mécanique choisie. Chaque étape met en oeuvre l'expression donnée dans la colonne D avec la valeur mémorisée du rendement (colonne B) et la valeur choisie et imposée de la caractéristique de référence (colonne C) associée, éventuellement, aux valeurs de caractéristiques dimensionnelles de la vis. La colonne F indique les expressions de vérification qui, dans une étape suivante, et à partir des caractéristiques mémorisées de la colonne C, et de la valeur du couple de resserrage Cr, effectivement exercé sur l'assemblage et mémorisé, permettent d'obtenir la valeur effective de la caractéristique de référence Ceffr, Fo, n, All, T s'exerçant dans l'assemblage et rappelée colonne G.

**TABLEAU N° I - MESURE**

| Etape de la phase de traitement A | Caractéristiques dont la valeur mémorisée est mise en oeuvre B | Caractéristiques dont la valeur est imposée C | Equation mise en oeuvre D | Caractéristique dont la valeur est mesurée, affichée et mémorisée E |
|---|---|---|---|---|
| 3 | Ceff | p | (10) $Ceff \dfrac{2\Pi}{p}$ | Fo |
| 4 | Fo | r | (11) $\dfrac{Fo}{\Pi r^2}$ | n |
| 5 | n | L et E | (12) $n \dfrac{L}{E}$ | All |
| 4 | Cs, Ceff, Fo | R et r1 | (13) $\dfrac{Cs-Ceff}{Fo(R+r1)}$ | f |
| 3 | Ceff | p, r | (14) $\dfrac{2Ceff}{pr^2}$ | n |
| 4 | Ceff, Cs | R, r1 | (15) $\dfrac{RCeff+r1Cs}{R+r1}$ | Ct |
| 5 | Ct | r | (16) $\dfrac{2Ct}{\Pi r^3}$ | t |
| 6 | n, t | | (17) $\sqrt{n^2+3t^2}$ | T |

EP 0 968 795 A1

## TABLEAU N° II - SERRAGE CONTROLE

| Etape de la phase de traitement | Caract.dont la valeur mémorisée est mise en oeuvre | Caract.dont la valeur est imposée | Equation mise en oeuvre | Caract.dont la valeur est mémorisée, et affichée | Equation de vérification de la valeur de la caractéristique imposée | Caract. vérifiée |
|---|---|---|---|---|---|---|
| A | B | C | D | E | F | G |
| 3 | Rdt | Ceffr | (16) $\dfrac{Ceffr}{Rdt}$ | Cr | (19) Cr Rdt | Ceffr |
| 3 | Rdt | Fo, p | (18) $\dfrac{Fo\,p}{2\Pi Rdt}$ | Cr | (21) $\dfrac{Cr2\Pi Rdt}{p}$ | Fo |
| 3 | Rdt | n, r, p | (20) $\dfrac{pr^2 n}{2Rdt}$ | Cr | (23) $\dfrac{Cr2Rdt}{pr^2}$ | n |
| 3 | Rdt | All, L, E, r et p | (22) $\dfrac{pr^2 All\,E}{2Rdt\,L}$ | Cr | (25) $\dfrac{Cr2RdtL}{pr^2 E}$ | All |
| 3 | Rdt | T, p, r, R, r1 | (26) $\sqrt{\dfrac{T^2}{\left[\dfrac{2Rdt}{p\,r^2}\right]^2 + 3\left[\dfrac{2(Rdt.R+r1)}{\Pi r^3 (R+r1)}\right]^2}}$ | Cr | (27) $\sqrt{Cr^2\left[\left[\dfrac{2Rdt}{p\,r^2}\right]^2 + 3\left[\dfrac{2(Rdt.R+r1)}{\Pi r^3 (R+r1)}\right]^2\right]}$ | T |

EP 0 968 795 A1

Dans une forme de mise en oeuvre préférée du procédé, et par exemple dans son application au serrage contrôlé par un cycle de serrage-desserrage-resserrage, ledit procédé consiste :

- lors de la phase de serrage, à appliquer sur la vis un couple de serrage Cs dont la valeur est inférieure, au plus de 15 %, à celle du couple de serrage calculé,
- et lors de la phase de desserrage, à arrêter le desserrage à environ 90 % de la valeur maximale du couple de desserrage Cd.

Ainsi, les étapes de serrage et de desserrage s'effectuent dans des conditions de charge et de frottement proches des conditions finales, ce qui permet de réduire au minimum les effets, sur le resserrage, des variations du coefficient de frottement moyen prenant en compte le frottement dans les filets et sous la tête de la vis.

L'invention concerne également le dispositif pour la mise en oeuvre de ce procédé. Ce dispositif comprend, comme toute clé ou tournevis dynamométrique :

- un organe d'entraînement en rotation de l'organe fileté,
- un capteur, mesurant le couple transmis à cet organe d'entraînement, avec ses moyens de transmission, d'amplification, et de conversion analogique numérique du signal obtenu,
- un afficheur numérique,
- des moyens d'alarme visuelle et/ou sonore,
- des moyens de mémorisation d'au moins une valeur de référence. telle que force,
- et une unité de traitement comparant la valeur du signal provenant du capteur avec la valeur de référence mémorisée et déclenchant les moyens d'alarme à égalité de valeur.

Dans le dispositif selon l'invention, l'unité de traitement est associée à un clavier de commande et est composée d'un microprocesseur avec mémoire vive et mémoire morte, cette mémoire morte comportant, en complément de logiciels d'exploitation du microprocesseur et du clavier, au moins l'un des logiciels de traitement suivants dont l'un résout l'équation (3) $\frac{Cs-Cd}{2}$ = Ceff et l'autre résout l'équation (4) $\frac{Cs-Cd}{2Cs}$ = Rdt, équations dans lesquelles Cs indique la valeur du couple de serrage, Cd la valeur du couple de desserrage et Ceff la valeur du couple efficace exercé sur l'assemblage après serrage au couple Cs, tandis que le clavier comprend :

- a) une touche de sélection de menus et logiciels, avec validation au relâchement,
- b) une touche de sélection de données prémémorisées dans des registres de la mémoire morte et de mémorisation des données mesurées, avec validation au relâchement, et
- c) deux touches de défilement dans les deux sens des menus, équations, fonctions, et/ou données mémorisées, ces touches étant multiplexées avec les touches de sélection des menus et des données.

D'autres caractéristiques et avantages ressortiront de la description qui suit en référence au dessin annexé.

Figure 1 est une vue en plan par dessus d'une forme d'exécution d'une clé dynamométrique mettant en oeuvre l'invention.
Figure 2 est un schéma montrant les composants essentiels du dispositif,
Figures 3 et 4 sont des schémas logiques des équations de base du procédé et du dispositif,
Figure 5 est un schéma logique d'une première forme de mise en oeuvre d'un dispositif dans le cas de son application à la mesure et au contrôle d'un assemblage vissé,
Figure 6 est une schéma logique montrant une autre forme de mise en oeuvre des moyens de traitement des données dans un dispositif affecté à la mesure et au contrôle d'un assemblage vissé,
Figures 7 et 8 représentent les schémas logiques de deux formes de mise en oeuvre du procédé dans le cas de son application à un dispositif de contrôle du serrage d'un assemblage vissé, par un cycle de serrage-desserrage-resserrage.

Dans la description qui suit, pour éviter toute confusion avec les numéros des expressions ou équations, les références partiront à partir du nombre 30.

Dans les dessins, les expressions E2, E3, E4, En, indiquent par leur indice l'ordre de l'étape de calcul dans la phase de traitement.

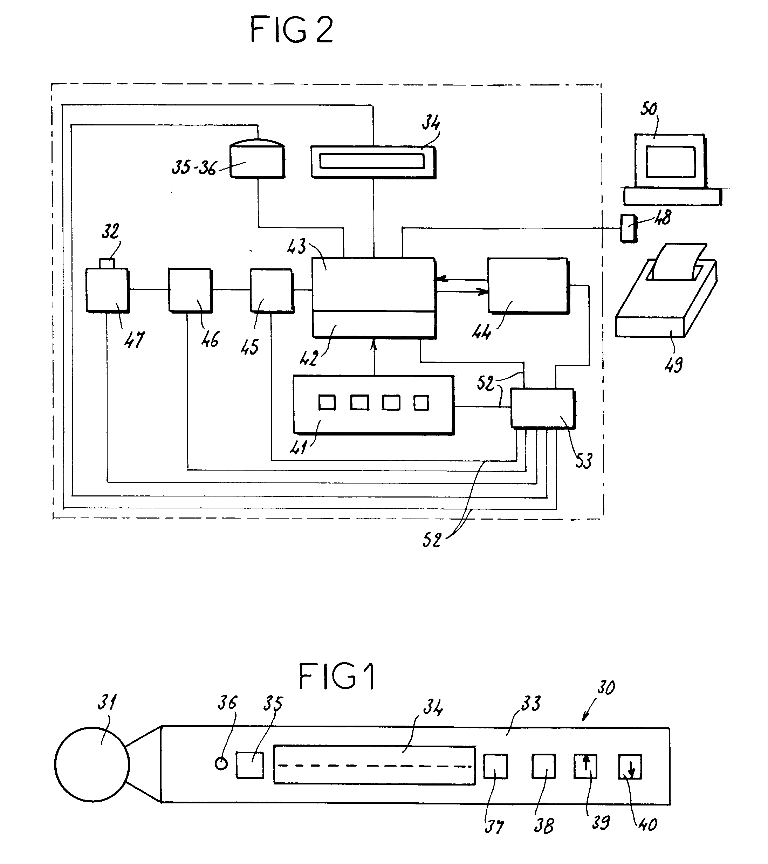

A la figure 1, la clé dynamométrique 30 est composée d'une tête 31 de laquelle fait saillie un organe d'entraînement 32, visible figure 2. Son corps 33 porte, de manière visible, un afficheur 34, une alarme lumineuse 35, une alarme sonore 36, et quatre touches d'un clavier, à savoir une touche 37 de sélection de menus, une touche 38 de sélection de données, deux touches 39 et 40 de commande de défilement des menus ou données. Ces deux dernières touches sont multiplexées avec les touches de sélection, respectivement, 37 des menus, et 38 des données, de manière à permettre par leur relâchement, la validation du menu ou de la donnée apparaissant sur l'afficheur numérique 34. Comme montré figure 2, ces touches font partie d'un clavier 41 qui agit sur la mémoire vive 42 d'une unité de traitement constituée par un microprocesseur 43 équipé d'une mémoire morte 44. Ce microprocesseur est connecté, à travers un convertisseur analogique-numérique 45, à un amplificateur 46 recevant des signaux d'un capteur 47, de couple ou d'effort, lié à l'organe d'entraînement 32. Le microprocesseur 43 est également connecté à l'afficheur 34, aux alarmes visuelle et sonore 35, 36 et à une sortie 48 pouvant être connectée à un périphérique, tel qu'une imprimante 49 ou un ordinateur 50 pour lecture directe ou différée. L'alimentation de ces différents organes est assurée par des circuits internes 52 à partir d'un boîtier d'alimentation électrique stabilisée 53, de type à piles ou accumulateur.

En complément de logiciels d'exploitation du microprocesseur 43 et du clavier 41, la mémoire morte 44 contient au moins l'un des deux logiciels de traitement dont l'un résout l'équation (3) et l'autre l'équation (4) dans une première opération de détermination de la valeur, respectivement, du couple efficace Ceff et du rendement Rdt.

Pour effectuer cette mesure, l'opérateur doit d'abord commander l'alimentation électrique du dispositif en actionnant la touche 37, et sélectionner le logiciel approprié en actionnant la même touche de sélection des menus 37, puis. l'une des touches de défilement 39 et 40 jusqu'à ce qu'apparaisse, dans l'afficheur 34, l'indication du menu de mesure, par exemple de la force. Ce menu, qui est validé par relâchement de la touche de défilement. annonce alors sur l'afficheur 34 qu'il faut choisir la valeur du couple de serrage dans le menu données, ce qui est réalisé en appuyant sur la touche de sélection 38 et en faisant défiler, sur l'afficheur, au moyen de l'une des touches 39 ou 40, des valeurs respectivement, croissantes ou décroissantes, du couple de serrage. Le relâchement de la touche actionnée valide cette valeur qui est mémorisée comme valeur de seuil des moyens d'alarme.

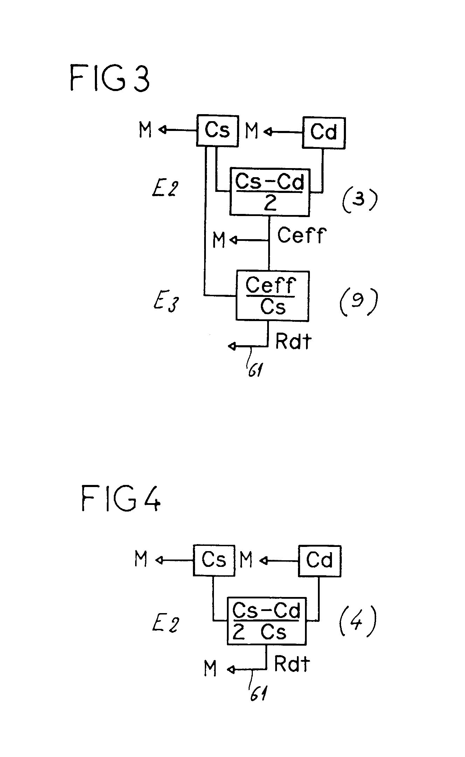

Il est alors procédé au serrage de l'organe fileté jusqu'au déclenchement de l'alarme par avertisseur sonore et/ou lumineux. La valeur maximale Cs du couple de serrage détectée par le capteur 32 est alors affichée et mémorisée automatiquement. Après cette étape. il est procédé à l'étape de desserrage. Durant celle-ci, le capteur 32 mesure la valeur maximale du coupe de desserrage Cd et cette valeur est affichée et mémorisée, puis, selon le menu initialement sélectionné, l'unité 43 traite l'équation 3, comme montré schématiquement à la figure 3, ou l'équation 4 comme montré figure 4 pour obtenir, respectivement, la valeur du couple efficace réellement exercé sur la vis Ceff, ou la valeur du rendement Rdt dans l'assemblage.

La valeur est alors affichée et mémorisée comme indique par la lettre M et/ou les flèches 61 sur les figures 3 à 8.

La figure 3 montre qu'il est aussi possible, à partir des valeurs mémorisées de Ceff et de Cs et à partir de l'expression 9 d'obtenir. dans une troisième étape, la valeur du rendement Rdt.

A l'un de ces logiciels de base, sont ajoutés, selon les formes d'exécution, d'autres logiciels sélectionnables par le clavier et permettant de déterminer les valeurs de caractéristiques autres que la seule valeur d'un couple ou d'une force.

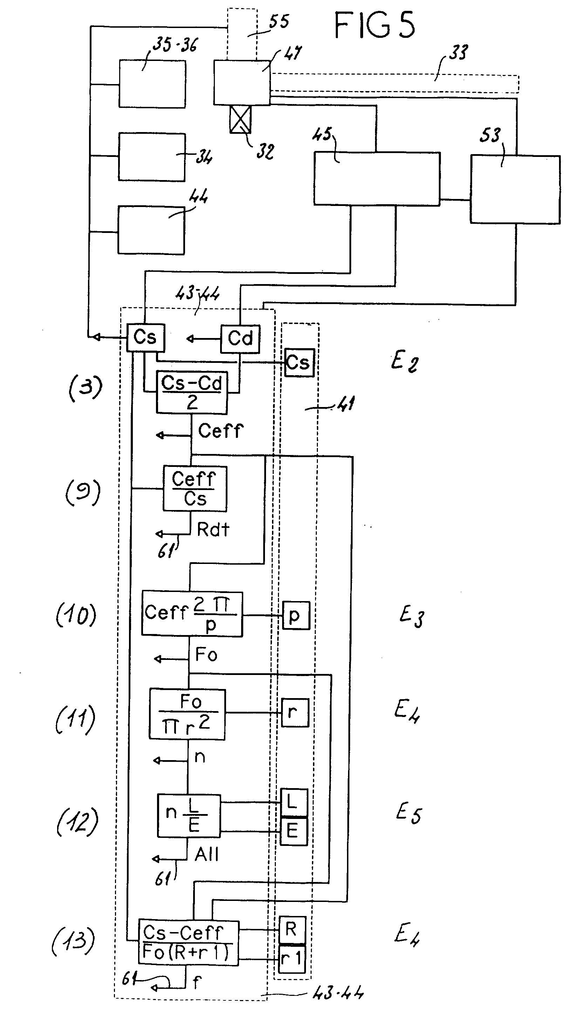

Ainsi, dans la forme d'exécution de figure 5 concernant un dispositif de mesure, la mémoire 44 contient des logiciels traitant successivement. en étape 3 à 5 de la phase de traitement, les expressions 10 à 12 du tableau I et un logiciel traitant, en quatrième étape, l'expression 13. Les valeurs des grandeurs p, r, L, E, R et r1 sont sélectionnées parmi des valeurs mémorisées dans des registres au moyen des touches 38 à 40 du clavier, soit immédiatement après sélection du menu, c'est-à-dire du programme de mesure, soit après traitement de l'expression de l'étape précédente. Ce traitement est toujours suivi de l'affichage et de la mémorisation de la valeur de la caractéristique recherchée dans cette étape, à savoir couple efficace de serrage Ceff, force de précontrainte dans la vis Fo, contrainte de traction dans la vis n, ou allongement de la vis All.

Toutes les valeurs ainsi obtenues, ainsi que celles du coefficient de frottement moyen f, données par l'expression 13, sont chacune, et après traitement, affichées et mémorisées. Ces valeurs peuvent aussi être traitées par un ordinateur externe 50 ou imprimées sur l'imprimante 49, si ces périphériques sont raccordés à l'unité de traitement 43.

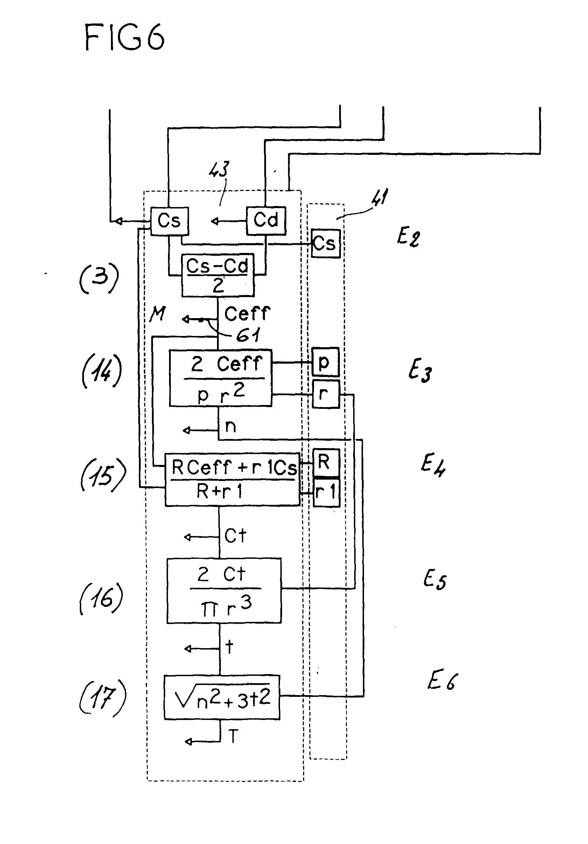

Dans la forme d'exécution de figure 6 correspondant encore à un programme de mesure, des logiciels permettent, respectivement, en étape 3 à 6 de la phase de traitement, de traiter les expressions 14 à 17 pour obtenir respectivement :

- par l'expression 14, la valeur de la contrainte de traction n dans la vis, à partir de la valeur mémorisée de Ceff, et des valeurs dimensionnelles de la vis choisies au clavier, à savoir pas p, et rayon r de la section résistante de la vis,
- par l'expression 15, la valeur du couple de torsion Ct de la vis à partir des valeurs mémorisées Ceff et de Cs et des valeurs dimensionnelles de la vis, R et r1, choisies au clavier,
- par l'expression 16, la valeur de la contrainte de torsion t de la vis à partir des valeurs mémorisées de Ct et de r.
- et par l'expression 17, la valeur de la contrainte totale T dans la vis à partir des valeurs mémorisées de n et t.

Les valeurs obtenues pour chacune des caractéristiques de référence, à savoir n, C, t, T sont chaque fois affichées et mémorisées.

Les deux formes d'exécution des figures 5 et 6 peuvent être combinées dans un même dispositif. Elles permettent, après sélection du programme et de la valeur des données, et à partir d'une seule mesure comprenant une phase de serrage et une phase de desserrage, de déterminer non seulement la force de précontrainte dans la vis, mais aussi les valeurs réelles de caractéristiques de référence d'un assemblage vissé qui, jusqu'alors, restaient méconnues.

Une telle clé dynamométrique est plus spécialement destinée au bureau des méthodes, aux fabricants de boulons et aux services de réception, pour optimiser statistiquement et sur site la boulonnerie, avec le minimum de calculs. La détermination du rendement permet de tester les anomalies de forme et de rejeter les produits non conformes.

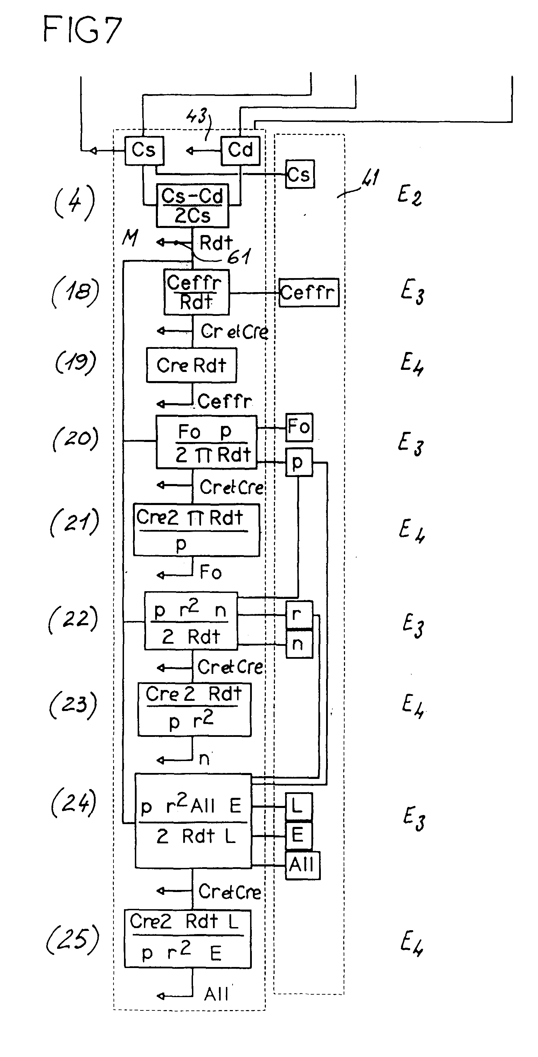

La figure 7 est un schéma fonctionnel d'une forme d'exécution d'une clé dynamométrique permettant d'assurer un serrage contrôlé. c'est-à-dire de serrer un assemblage fileté à une valeur voulue d'une caractéristique de référence telle que couple de resserrage Ceffr, force de précontrainte dans la vis Fo, contrainte de traction $\underline{n}$ dans la vis, allongement de la vis All, et cela dans le cadre d'un cycle de serrage-desserrage-resserrage, c'est-à-dire d'un cycle de mesure par serrage-desserrage suivi d'un resserrage.

La mémoire 44 contient les logiciels traitant, en étape 3 de la phase de traitement, les expressions 18, 20, 23 et 25, mais aussi les logiciels traitant, en étape 4, les expressions de vérification de chacune des valeurs de référence utilisées dans ces expressions, c'est-à-dire traitant les expressions 19, 21, 23 et 25 du tableau 2. Pour réaliser avec ce dispositif, le serrage contrôlé d'un organe fileté, et par exemple de la tête d'une vis ou de l'écrou d'un boulon, il faut successivement sélectionner, sur le clavier 41, le menu de serrage contrôlé, la valeur du couple de serrage Cs, c'est-à-dire la valeur du seuil de déclenchement de l'alarme au premier serrage, et la valeur de la caractéristique de référence, à savoir de Ceffr, de Fo, de $\underline{n}$ ou de All et, éventuellement la valeur de caractéristiques dimensionnelles ou mécaniques pour les expressions 20, 22 et 24.

Il est précisé que, pour la première phase de serrage, la valeur mémorisée de Cs est choisie inférieure, à la valeur du couple de serrage devant être appliquée à la vis, cette différence étant au plus de 15 %.

Le serrage s'effectue de la façon suivante.

La première phase de serrage est arrêtée dès que l'alarme indique que la valeur du couple de serrage Cs est atteinte. La valeur réelle de ce couple est mesurée par le capteur 32, mémorisée puis affichée.

Il est alors procédé au desserrage pendant lequel le même capteur mesure la valeur de crête du couple de desserrage Cd. Cette valeur mémorisée est multipliée par 0,9 pour constituer la valeur du seuil de l'alarme au desserrage. Ainsi, dès que le couple de desserrage parvient à une valeur égale à 90% de sa valeur de crête, l'alarme se déclenche et le desserrage est arrêté. Cette procédure évite que le desserrage modifie trop les conditions de frottement entre les éléments de l'assemblage fileté, ce qui aurait pour effet de fausser la mesure et le resserrage ultérieur.

La valeur de crête mesurée et mémorisée du couple Cd est traitée avec la valeur mesurée mémorisée du couple de serrage Cs par l'expression 4 qui combine les étapes 1 et 2 de la phase de traitement et procure la valeur du rendement Rdt de l'assemblage. Cette valeur de rendement est mémorisée et affichée. De la sorte, si la valeur du rendement Rdt est anormale, l'opérateur peut arrêter le processus de serrage, soit pour changer l'un des éléments filetés, soit pour améliorer le graissage de l'assemblage.

A partir de ce stade, il est procédé au traitement des valeurs mesurées et mémorisées de Cs et de Cd avec les valeurs indiquées dans la colonne C du tableau 2, nécessaire aux expressions 18, 20, 22 ou 26 retenues pour assurer le traitement.

Chacune de ces expressions fournit la valeur du couple de resserrage Cr et cette valeur, affichée et mémorisée, constitue la valeur du seuil de déclenchement de l'alarme, lors du resserrage.

Le resserrage est réalisé jusqu'à déclenchement de l'alarme indiquant que la valeur du couple mesurée par le capteur 32 est proche de la valeur Cr, précédemment déterminée. A l'arrêt du resserrage, la valeur du couple de resserrage réel Cre, alors mesurée par le capteur, et qui peut être différente de la valeur de Cr, est mémorisée et affichée.

L'unité de traitement 45 procède alors à une opération de vérification de la caractéristique de référence en traitant l'expression de vérification appropriée, choisie parmi celles 19, 21, 23, et 25 du tableau II et en faisant appel aux valeurs mémorisées de Rdt, de Cre et des diverses autres caractéristiques utilisées dans l'expression antérieure permettant de calculer le couple de reserrage Cr. Par exemple, pour vérifier la longueur de l'allongement All, par l'expression 25, il est fait appel aux valeurs mémorisées de L, p, r, et E qui se retrouvent toutes dans l'expression antérieure 24. La valeur de All, ainsi obtenue, est mémorisée et affichée. Si elle est très éloignée de la valeur choisie au départ, il peut être procédé, après desserrage de l'organe fileté, à une nouvelle opération de serrage, desserrage, resserrage.

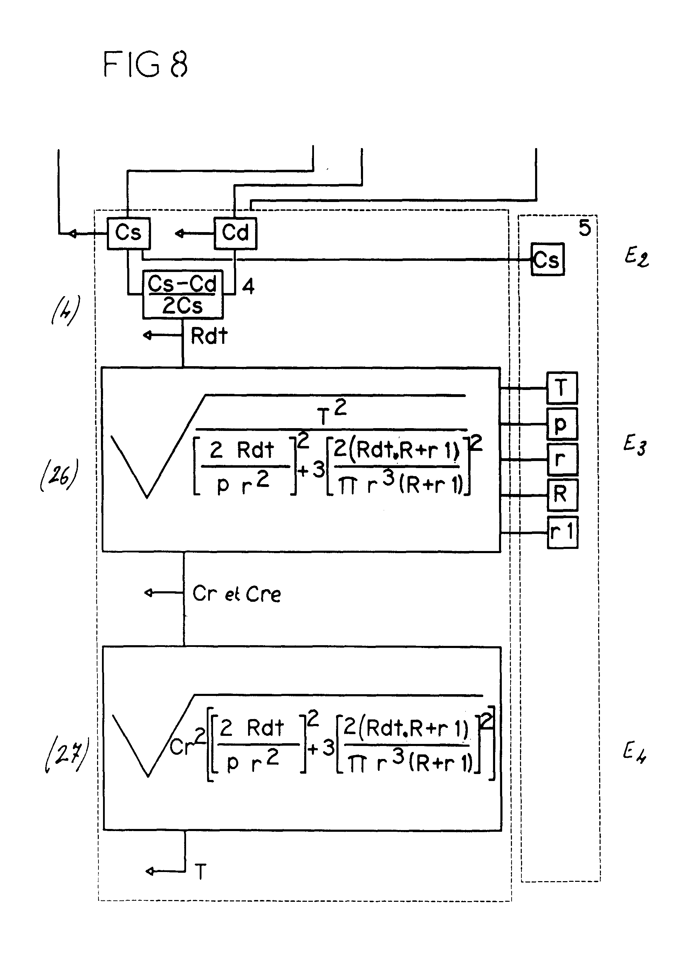

Dans la forme d'exécution du dispositif représentée à la figure 8, l'étape 3 de la phase de traitement, met en oeuvre, par un logiciel stocké dans la mémoire 44, l'expression 26 pour déterminer la valeur du couple de serrage Cr, et en étape 4, et par un autre logiciel, l'expression 27 de vérification de la valeur de la contrainte totale T dans la vis.

Lors de la programmation, les valeurs des paramètres T, p, r, R et r1 de l'expression 26 sont choisies dans des registres indépendants au moyen du clavier 41. Les valeurs des paramètres dimensionnels p, r, R et r1, peuvent aussi être choisies par rattachement à un registre donnant différentes valeurs du diamètre nominal de l'organe fileté, et la valeur de T par un registre donnant cette valeur par rapport aux différentes classes de qualité normalisée de cet organe. Ainsi, pour une opération de serrage contrôlé d'une vis ISO standard, au moyen d'une clé dynamométrique spécifique au serrage contrôlé, l'opérateur n'a qu'à sélectionner au clavier 41, la valeur du diamètre nominal de la vis et la valeur de sa classe de qualité et procéder à l'opération de serrage-desserrage-resserrage, en suivant les indications de l'afficheur et les alarmes. En fin de resserrage et après traitement par l'expression 27, la lecture de l'afficheur indique la valeur effective de la contrainte totale T dans la vis.

Ces dispositifs de serrage contrôlé sont destinés aux montages industriels précis et peuvent être montés sur des clés dynamométriques comme décrits ci dessus, mais aussi sur des tournevis dynamométriques manuels, sur des visseuses électriques ou pneumatiques. Dans ce cas, les moyens d'alarme sont remplacés par un contacteur qui commande l'interruption de l'alimentation des moyens 55 (figure 5) entraînant l'organe d'entraînement 32 assurant le vissage ou le dévissage.

Ces dispositifs peuvent également être utilisés en laboratoire ou en bureau de recherche, pour vérifier, jusqu'à la rupture, la tenue de tout organe fileté. Enfin, la mesure du rendement réalisé dans l'étape 2 de la phase de traitement permet de détecter les anomalies de graissage ou d'état de surface, dès le début de l'opération de serrage.

Un même dispositif, et par exemple une clé dynamométrique, peut comporter dans sa mémoire 44 les différents programmes de mesure et de serrage contrôlé décrits en référence aux figures 3 à 8.

Par rapport aux dispositifs et procédé de serrage connus, ceux selon l'invention :

- sont faciles à mettre en oeuvre,
- sont applicables sur de la boulonnerie standard,
- permettent des expérimentations sur site, sans recours à des prototypes de laboratoire,
- suppriment tous calculs fastidieux, puisque ceux-ci sont réalisés automatiquement,
- sont faciles à programmer,
- suppriment toute approximation de calcul, surtout en ce qui concerne le coefficient de frottement,
- détectent immédiatement les anomalies de serrage, grâce à l'indication du rendement,
- permettent de mesurer non seulement des forces mais aussi des couples, des contraintes et des allongements, jusqu'à la rupture,
- offrent un choix important de valeur de sortie, et permettent, dans le serrage contrôlé, de vérifier la valeur effective de la grandeur prise comme référence.

## Revendications

1. Procédé de mesure et de serrage d'un assemblage par organe fileté comprenant :

   - une première phase de serrage avec mesure du couple de serrage Cs, à sa valeur maximale et mémorisation de cette valeur,
   - une deuxième phase de desserrage avec mesure du couple de desserrage Cd, à sa valeur maximale et mémorisation de ce couple Cd,
   - une phase de traitement des valeurs mémorisées lors des deux premières phases, et dans laquelle une première étape réalise la soustraction :

$$(2)\ Cs - Cd$$

   et mémorise la valeur obtenue,

   **caractérisé en ce qu'**il consiste dans une deuxième étape de la phase de traitement :

   * à soumettre la valeur résultant de la soustraction (2) Cs - Cd de la première étape,

   - soit à sa division par deux selon l'expression (3) :
     $\frac{Cs-Cd}{2}$ pour fournir la valeur effective du couple efficace Ceff sollicitant l'assemblage,
   - soit à sa division par le produit 2Cs selon l'expression (4) :
     $\frac{Cs-Cd}{2Cs}$ pour fournir la valeur du rendement Rdt de l'assemblage,

* à mémoriser la valeur Ceff ou de Rdt obtenue,
* et à afficher cette valeur.

2. Procédé selon la revendication 1, **caractérisé en ce que** la valeur du couple efficace Ceff mémorisée pendant la deuxième étape de la phase de traitement est, dans une troisième étape, divisée par la valeur mémorisée du couple de serrage Cs suivant l'expression (9) $\frac{Ceff}{Cs}$, pour obtenir la valeur du rendement Rdt de l'assemblage et cette valeur Rdt est, à son tour, affichée et mémorisée.

3. Procédé selon la revendication 1, **caractérisé en ce que**, dans une troisième étape de la phase de traitement, la valeur mémorisée du couple efficace Ceff est traitée par l'expression (10) $Ceff\frac{2\Pi}{p}$, dans laquelle $\underline{p}$ correspond à la valeur du pas de la vis, pour obtenir la valeur Fo de la force de traction sollicitant la vis et cette valeur Fo est affichée et mémorisée.

4. Procédé selon la revendication 3, **caractérisé en ce que,** dans une quatrième étape de la phase de traitement, la valeur mémorisée de la force de traction Fo et traitée par l'expression (11) $\frac{Fo}{\Pi r^2}$, dans laquelle $\underline{r}$ représente la valeur du rayon de la section résistante de la vis mesurée, pour obtenir la valeur $\underline{n}$ de la contrainte de traction dans la vis, et cette valeur $\underline{n}$ est affichée et mémorisée.

5. Procédé selon la revendication 4, **caractérisé en ce que,** dans une cinquième étape de la phase de traitement, la valeur mémorisée de la contrainte de traction $\underline{n}$ est traitée par l'expression (12) $n\frac{L}{E}$, dans laquelle L représente une valeur déterminée de la longueur étirée de la vis, et E le module d'élasticité du matériau constituant cette vis, pour obtenir la valeur de l'allongement All de la vis, et cette valeur All est affichée et mémorisée.

6. Procédé selon la revendication 4, **caractérisé en ce que**, dans une cinquième étape de la phase de traitement, les valeurs mémorisées de la force de traction Fo, du couple de serrage Cs et du couple efficace Ceff sont traitées par l'expression (13) $\frac{Cs-Ceff}{Fo(R-r1)}$ dans laquelle R représente la valeur du rayon moyen de la tête de la vis, et r1 la valeur du rayon moyen du filet de la vis, pour obtenir la valeur du coefficient de frottement moyen $\underline{f}$ de la vis dans l'assemblage, et cette valeur de $\underline{f}$ est affichée et mémorisée.

7. Procédé selon la revendication 1, **caractérisé en ce que** la valeur du couple efficace Ceff, mémorisée pendant la deuxième étape de la phase de traitement est, dans une troisième étape, traitée par l'expression (14) $\frac{2Ceff}{pr}$ dans laquelle $\underline{p}$ représente la valeur du pas de la vis et $\underline{r}$ le rayon de la section resistante de cette vis, pour obtenir la valeur de la contrainte de traction $\underline{n}$ dans la vis, et cette valeur $\underline{n}$ est affichée et mémorisée.

8. Procédé selon la revendication 1, **caractérisé en ce que** dans une étape de la phase de traitement, les valeurs mémorisées du couple efficace Ceff et du couple de serrage Cs sont traitées par l'expression (15) $\frac{RCeff + r1Cs}{R + r1}$, dans laquelle R représente la valeur du rayon moyen de la tête de vis et r1 la valeur du rayon moyen du filet de la vis, pour obtenir la valeur du couple de torsion Ct exercé sur cette vis, et cette valeur Ct est affichée et mémorisée.

9. Procédé selon la revendication 8, **caractérisé en ce que** dans une étape de la phase de traitement des données, la valeur mémorisée du couple de torsion Ct est traitée par l'expression (16) $\frac{2Ct}{\Pi r^3}$, dans laquelle $\underline{r}$ représente la valeur du rayon de la section résistante de la vis, pour obtenir la valeur t de la contrainte de torsion dans la vis, et cette valeur $\underline{t}$ est affichée et mémorisée.

10. Procédé selon les revendications 7 et 9, **caractérisé en ce que** dans une étape de la phase de traitement des données, les valeurs mémorisées de la contrainte de traction $\underline{n}$ et de la contrainte de torsion $\underline{t}$ dans la vis sont traitées par l'expression (17) $\sqrt{n^2 + 3t^2}$ pour obtenir la valeur de la contrainte totale T dans la vis et cette valeur T est affichée et mémorisée.

11. Procédé selon la revendication 1, **caractérisé en ce que,** pour une opération de serrage jusqu'à une valeur de référence d'une caractéristique mécanique, suivant une séquence de serrage-desserrage-resserrage, et pendant la phase de traitement suivant la phase de desserrage, et après l'étape de détermination du rendement Rdt de l'assemblage, il consiste :

- à déterminer la valeur du couple de resserrage Cr au moyen d'une équation prenant en compte la valeur mémorisée du rendement Rdt et une valeur imposée d'une caractéristique mécanique prise comme référence,
- à mémoriser cette valeur Cr et à l'afficher,
- à effectuer le resserrage jusqu'à la valeur précédemment calculée de Cr, sous le contrôle des moyens d'alarme,

- à mesurer la valeur effective du couple de reserrage Cre dans la vis, à la mémoriser et à l'afficher.

**12.** Procédé selon la revendication 11, **caractérisé en ce qu'**il consiste, après resserrage et affichage de la valeur effective du couple de resserrage Cre, à réaliser une étape de contrôle dans laquelle la valeur effective mémorisée de ce couple de serrage Cre est traitée par une formule donnant la valeur effective de la caractéristique mécanique de référence ayant servi à la détermination du couple de reserrage Cr, et à afficher et mémoriser cette valeur.

**13.** Procédé selon la revendication 11, **caractérisé en ce que** la valeur de référence est celle du couple efficace de resserrage Ceffr et elle est traitée par l'expression (18) $\frac{Ceffr}{Rdt}$.

**14.** Procédé selon l'ensemble des revendications 12 et 13, **caractérisé en ce que** le contrôle de la valeur de référence du couple efficace de resserrage Ceffr est réalisé par l'expression (19) $Cr\,Rdt$.

**15.** Procédé selon la revendication 11, **caractérisé en ce que** la valeur de référence est celle de la force de précontrainte Fo dans la vis et elle est traitée par l'expression (20) $\frac{Fo\,p}{2\Pi Rdt}$.

**16.** Procédé selon l'ensemble des revendications 12 et 15, **caractérisé en ce que** le contrôle de la valeur de référence de la force de précontrainte Fo est effectué par l'expression (21) $\frac{Cr2\Pi Rdt}{p}$.

**17.** Procédé selon la revendication 11, **caractérisé en ce que** la valeur de référence est celle de la contrainte de traction $\underline{n}$ dans la vis et elle est traitée par l'expression (22) $\frac{pr^2 n}{2Rdt}$.

**18.** Procédé selon l'ensemble des revendications 12 et 17, **caractérisé en ce que** le contrôle de la valeur de référence de la contrainte de traction $\underline{n}$ dans la vis est effectué par l'expression (23) $\frac{Cr2Rdt}{pr^2}$.

**19.** Procédé selon la revendication 11, **caractérisé en ce que** la valeur de référence est celle de l'allongement All de la vis et elle est traitée par l'expression (24) $\frac{pr^2\,All\,E}{2Rdt\,L}$.

**20.** Procédé selon l'ensemble des revendications 12 et 18, **caractérisé en ce que** le contrôle de la valeur de référence de l'allongement All est effectué par l'expression (25) $\frac{Cr2Rdt\,L}{pr^2\,E}$.

**21.** Procédé selon la revendication 11, **caractérisé en ce que** la valeur de référence est celle de la contrainte totale T dans la vis et elle est traitée par l'expression (26)

$$\sqrt{\frac{T^2}{\left[\dfrac{2Rdt}{p\ r^2}\right]^2 + 3\left[\dfrac{2(Rdt.R+r1)}{\Pi r^3(R+r1)}\right]^2}}$$

après sélection de la valeur de cette contrainte T, de la valeur du pas $\underline{p}$, de la valeur du rayon $\underline{r}$ de la section résistante de la vis, de la valeur du rayon moyen R de la tête de vis et de la valeur du rayon moyen r1 du filetage de la vis.

**22.** Procédé selon l'ensemble des revendications 12 et 20, **caractérisé en ce que** le contrôle de la valeur de référence de la contrainte totale T dans la vis est effectué par l'expression (27)

$$\sqrt{Cr^2\left[\left[\dfrac{2Rdt}{p\ r^2}\right]^2 + 3\left[\dfrac{2(Rdt.R+r1)}{\Pi r^3(R+r1)}\right]^2\right]}$$

**23.** Procédé selon l'une quelconque des revendications 1 à 22, **caractérisé en ce qu'**il consiste :

- lors de la première phase de serrage, à appliquer sur la vis un couple de serrage Cs dont la valeur est inférieure, au plus de 15 % de celle du couple de serrage calculé,

- et, lors de la deuxième phase de desserrage, à arrêter le desserrage à environ 90 % de la valeur maximale du couple de desserrage Cd.

**24.** Dispositif pour la mise en oeuvre du procédé selon l'une quelconque des revendications 1 à 23, comprenant :

- un organe d'entraînement en rotation (32) de l'organe fileté,
- un capteur (47), mesurant le couple transmis à cet organe d'entraînement avec ses moyens de transmission, d'amplification et de conversion/analogique numérique du signal obtenu,
- un afficheur numérique (34),
- des moyens d'alarme visuelle et/ou sonore (35, 36),
- des moyens de mémorisation (44) d'au moins une valeur de référence,
- et une unité de traitement (43) comparant la valeur du signal provenant du capteur (47) avec la valeur de référence mémorisée et déclenchant les moyens d'alarme à égalité de valeur,

**caractérisé en ce que** l'unité de traitement (43) est associée à un clavier de commande et est composée d'un microprocesseur avec mémoire vive et mémoire morte, cette mémoire morte (44) comportant, en complément de logiciels d'exploitation du microprocesseur et d'un clavier, au moins l'un des deux logiciels de traitement suivants dont l'un résout l'équation (3) $\frac{Cs-Cd}{2}=Ceff$ l'autre résout l'équation (4) $\frac{Cs-Cd}{2Cs} = Rdt$, équations dans lesquelles Cs indique la valeur du couple de serrage, Cd la valeur du couple de desserrage et Ceff la valeur du couple efficace exercée sur l'assemblage après serrage au couple Cs, tandis que le clavier assurant la sélection du logiciel utilisé comprend :

- a) une touche (37) de sélection de menus et logiciels, avec validation au relâchement,
- b) une touche (38) de sélection de données prémémorisées dans des registres de la mémoire morte et de mémorisation des données mesurées, et avec validation au relâchement,
- c) deux touches (39, 40) de défilement dans les deux sens des menus, équations, fonctions, et/ou données mémorisés, ces touches étant multiplexées avec les touches (37, 38) de sélection des menus et des données.

**25.** Dispositif selon la revendication 24, **caractérisé en ce que** sa mémoire morte (44) contient également des logiciels sélectionnables par le clavier et permettant de résoudre, à partir des données mémorisées résultants des expressions (3)$\frac{Cs-Cd}{2}$ (4) $\frac{Cs-Cd}{2Cs}$ ou (9) $\frac{Ceff}{Cs}$, l'une des expressions 10 à 25 définies dans les revendications 3 à 10 et 13 à 20.

**26.** Dispositif selon la revendication 24, **caractérisé en ce que** sa mémoire morte contient également :

- des logiciels permettant de résoudre successivement les expressions :

$$(26) \sqrt{\frac{T^2}{\left[\frac{2Rdt}{p\ r^2}\right]^2 + 3\left[\frac{2(Rdt.R+r1)}{\Pi r^3(R+r1)}\right]^2}} \text{ et } (27) \sqrt{Cr^2\left[\left[\frac{2Rdt}{p\ r^2}\right]^2 + 3\left[\frac{2(Rdt.R+r1)}{\Pi r^3(R+r1)}\right]^2\right]}$$

à partir de la valeur mémorisée de Rdt résultant de l'expression (4) $\frac{Cs-Cd}{2Cs}$
- un registre de mémoire contenant des valeurs de la contrainte totale T dans la vis en rapport avec les classes de qualité de la vis, et sélectionnables par les touches (38, 39, 40) du clavier,
- et un registre de mémoire contenant, pour des vis normalisées, les valeurs dimensionnelles du pas p̲ et des rayons R, r et r1, ce registre étant sélectionné par les touches (38, 39, 40) du clavier.

FIG 2

FIG 1

FIG 3

$$M \leftarrow \boxed{Cs} \quad M \leftarrow \boxed{Cd}$$

E2 $\quad \boxed{\dfrac{Cs-Cd}{2}} \quad (3)$

$M \leftarrow \quad Ceff$

E3 $\quad \boxed{\dfrac{Ceff}{Cs}} \quad (9)$

$\leftarrow \quad Rdt$

61

FIG 4

$$M \leftarrow \boxed{Cs} \quad M \leftarrow \boxed{Cd}$$

E2 $\quad \boxed{\dfrac{Cs-Cd}{2 \; Cs}} \quad (4)$

$M \leftarrow \quad Rdt$

61

# FIG 5

# FIG 6

# FIG 7

# FIG 8

**Office européen des brevets**

# RAPPORT DE RECHERCHE EUROPEENNE

Numéro de la demande

EP 99 42 0147

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,A | FR 2 677 571 A (CIANDAR) 18 décembre 1992 (1992-12-18) * revendications * --- | 1-26 | B25B23/14 B23P19/06 |
| D,A | FR 2 527 714 A (REGIE NATIONALE DES USINES RENAULT) 2 décembre 1983 (1983-12-02) --- | 1-26 | |
| A | US 5 105 519 A (T.DONIWA) 21 avril 1992 (1992-04-21) * le document en entier * --- | 1-26 | |
| A | DE 40 24 577 A (ROBERT BOSCH GMBH) 6 février 1992 (1992-02-06) * colonne 1, ligne 10 - ligne 27; revendications * --- | 1-26 | |
| A | US 4 142 266 A (N.C.DAHL) 6 mars 1979 (1979-03-06) --- | | |
| A | US 4 037 282 A (N.C.DAHL) 26 juillet 1977 (1977-07-26) ----- | | DOMAINES TECHNIQUES RECHERCHES (Int.Cl.7) B25B B23P |

Le présent rapport a été établi pour toutes les revendications

| Lieu de la recherche | Date d'achèvement de la recherche | Examinateur |
|---|---|---|
| LA HAYE | 7 octobre 1999 | Majerus, H |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 99 42 0147

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-10-1999

| Document brevet cité au rapport de recherche | | Date de publication | Membre(s) de la famille de brevet(s) | | Date de publication |
|---|---|---|---|---|---|
| FR 2677571 | A | 18-12-1992 | DK | 674566 T | 04-05-1998 |
| | | | EP | 0674566 A | 04-10-1995 |
| | | | WO | 9413437 A | 23-06-1994 |
| | | | US | 5571971 A | 05-11-1996 |
| | | | DE | 69222543 D | 06-11-1997 |
| | | | DE | 69222543 T | 23-04-1998 |
| FR 2527714 | A | 02-12-1983 | EP | 0096620 A | 21-12-1983 |
| | | | ES | 522705 A | 01-03-1984 |
| | | | JP | 58217278 A | 17-12-1983 |
| | | | US | 4488437 A | 18-12-1984 |
| US 5105519 | A | 21-04-1992 | DE | 3521937 A | 02-01-1987 |
| DE 4024577 | A | 06-02-1992 | SE | 9102276 A | 03-02-1992 |
| US 4142266 | A | 06-03-1979 | US | 4037282 A | 26-07-1977 |
| US 4037282 | A | 26-07-1977 | US | 4035858 A | 19-07-1977 |
| | | | US | 4142266 A | 06-03-1979 |
| | | | US | 4078273 A | 14-03-1978 |

EPO FORM P0460

Pour tout renseignement concernant cette annexe : voir Journal Officiel de l'Office européen des brevets, No.12/82